# EUROPÄISCHE PATENTSCHRIFT

(11) **EP 1 750 193 B1**
(45) Veröffentlichungstag und Bekanntmachung des Hinweises auf die Patenterteilung: **16.01.2019**
(21) Anmeldenummer: 06009916.5
(22) Anmeldetag: 13.05.2006
(51) Int. Cl.: G05F 1/67

(54) **Verfahren zum Auffinden eines Leistungsmaximums eines Photovoltaik-Generators**
Method for finding a power output peak of a photovoltaic generator
Procédé destiné à la détermination d'une performance maximum d'un générateur photovoltaïque

(30) Priorität: 14.07.2005 DE 102005032864
(43) Veröffentlichungstag der Anmeldung: 07.02.2007
(73) Patentinhaber: SMA Solar Technology AG, 34266 Niestetal (DE)
(72) Erfinder: Bettenwort, Gerd, D-34119 Kassel (DE); Kühnel, Christian, D-34121 Kassel (DE); Arend, Oliver, D-34253 Lohfelden (DE); Laschinski, Joachim, D-34134 Kassel (DE); Leonhardt, Gerald Alexander, D-34125 Kassel (DE); Reichenbächer, Wolfgang Kurt, D-34355 Staufenberg (DE)

(56) Entgegenhaltungen:
- EP-A- 1 239 576
- JP-A- 07 225 624
- US-A- 5 869 956
- US-A1- 2005 068 012
- PATENT ABSTRACTS OF JAPAN Bd. 2000, Nr. 01, 31. Januar 2000 (2000-01-31) & JP 11 282555 A (SANYO ELECTRIC CO LTD), 15. Oktober 1999 (1999-10-15)
- ARIAS J. ET AL: "A modular PV regulator based on microcontroller with maximum power point tracking", INDUSTRY APPLICATIONS CONFERENCE, 2004. 39TH IAS ANNUAL MEETING. CONFE RENCE RECORD OF THE 2004 IEEE SEATTLE, WA, USA 3-7 OCT. 2004,, vol. 2, 3 October 2004 (2004-10-03), pages 1178-1184, XP010735154, SEATTLE, WA, USA

## Beschreibung

Die Erfindung betrifft ein Verfahren nach dem Oberbegriff des Anspruches 1.

Photovoltaik-Generatoren haben charakteristische Leistungskennlinien, bei denen in der Regel ein Arbeitspunkt maximaler Leistung vorhanden ist. Diesem Arbeitspunkt ist ein bestimmter Generator-Strom und eine bestimmte Generatorspannung zugeordnet.

Bekannt sind Verfahren, bei denen die Generatorbelastung, z.B. der Generatorstrom, so eingestellt wird, dass der Photovoltaik-Generator mit maximaler Leistung betrieben wird.

Derartige Verfahren bezeichnet man als Maximum-Power-Point-Tracking (MPPT).

Ein Verfahren, das in der DE 199 04 561 C1 vorgestellt wird, besteht darin, dass ein zusätzlicher Sensor eingesetzt wird, der die eintreffende Strahlung misst und über eine Kennlinienmessschaltung und einen Mikrorechner ein Leistungsmaximum einstellt. Fällt auf den Sensor ein Schatten oder wird ein Teil des Generators abgeschattet, dann stellt sich ein Arbeitspunkt ein, der nicht die größte Leistung liefert, wodurch die Energieausbeute des Gesamtsystems abfällt.

Ein anderes Verfahren ist aus der DE 199 09 609 C1 bekannt. Hier wird kein Sensor eingesetzt, sondern die Generatorkennlinie durch das Einschalten eines Kondensators direkt gemessen. Durch einen Mikrorechner wird der ermittelte optimale Arbeitspunkt eingestellt. Bei Abschattung eines Generatorteils jedoch können sich mehrere lokale Leistungsmaxima einstellen, die verschieden hoch sein können. Daher kann es bei Teil-Abschattung vorkommen, dass der Generator nicht die maximale Leistung liefert und ein Teil der Solarenergie nicht genutzt wird.

Ein weiteres Verfahren zur Einstellung des Punktes maximaler Leistung eines Solargenerators einer Photovoltaikanlage ist in der DE 100 60 108 A1 beschrieben. Über eine einmalige Vermessung der physikalischen Parameter des Generators wird der maximale Punkt maximaler Leistung eingestellt, solange dieser nicht teilverschattet ist.

Die DE 4325436 C2 beschreibt ein Verfahren, bei dem der Generator zyklisch kurzgeschlossen und entlastet wird. Nachteilig ist auch hier, dass eine Teilverschattung nicht erkannt wird.
Aus der US-A-5 869 956 ist ein Verfahren zum Auffinden eines Leistungsmaximums eines Photovoltaik-Generators bekannt, bei dem eine Maximum-Power-Point- bzw. MPP Regelung eines Stromrichters eingesetzt wird, mit der eine maximale Generatorleistung bei einem Arbeitspunkt der Generatorkennlinie eingestellt wird. Hierbei wird eine Maximum Power Point Regelung beschrieben, bei der schrittweise ein Leistungsmaximum gefunden werden soll. Darüber hinaus offenbart diese Schrift ein Verfahren, um bei mehreren Leistungsmaxima das richtige zu finden. Es erfolgt eine sogenannte Wide Area Search (WAS). Die eigentliche MPP-Regelung wird praktisch abgeschaltet, um die WAS-Regelung zu aktivieren. Die MPP-Regelung wird abgeschaltet, um mehrere Leistungsmaxima bei Teilverschattungseffekten zu erfassen. Die WAS-Suche erfolgt allerdings über mehrere Minuten, z.B. 3 Minuten. Die Kennlinie wird über einen weiten Spannungsbereich abgefahren, so dass sich eine Vielzahl anderer Arbeitspunkte einstellen. Diese Punkte werden mit einer S&H-Stufe erfasst bzw. errechnet und in einem Speicher gespeichert. Es wird abgefragt, ob ein Leistungsmaximum vorliegt oder nicht.

J. Arias et al, "A Modular PV Regulator Based on Microcontroller with Maximum PowerPoint Tracking" offenbart einen MPP-Regler. Der Erfindung liegt die Aufgabe zugrunde, einen PV-Genrator so zu betreiben, dass er ein Maximum an Energie abgeben kann.

Diese Aufgabe wird durch einen Stromrichter mit den kennzeichnenden Merkmalen des Anspruches 1 in Verbindung mit seinen Oberbegriffsmerkmalen gelöst.
Durch die Erfindung ist es möglich, die Energieausbeute eines Systems bestehend aus einem Photovoltaikgenerator und einem Stromrichter zu erhöhen, wenn eine Teilverschattung des Generators eintritt und eine herkömmliche Maximumregelung MPPT aufgrund mehrerer Maxima in der Generatorkennlinie versagen würde.

Die Erfindung beruht auf der Erkenntnis, dass sich auch mehrere lokale Leistungsmaxima unterschiedlicher Höhe bei Teilverschattungseffekten einstellen können.

Hierbei liegt der Gedanke zugrunde, dass ein gezieltes Herstellen einer instabilen Regelung und Wiederherstellen einer stabilen Regelung sowie eine Auswertung der so erfolgten Messergebnisse zur Lösung des Problems der Teilverschattung führt. Grundsätzlich ist jede Regelung geeignet, die sich zwischen einer stabilisierenden und einer nicht stabilisierenden Wirkung umschalten lässt.

Durch einen gezielten Eingriff in die Regelschleifen des Stromrichters wird eine Instabilität erzeugt, so dass sich nahezu verzögerungsfrei ein neuer Arbeitspunkt einstellt, der im Nahbereich eines lokalen oder globalen Maximums liegt, falls dieses Maximum eine höhere Leistung aufweist als das zuvor erkannte Leistungsmaximum.

Liegt zwischen dem sich neu einstellenden stabilen Arbeitspunkt und dem Arbeitspunkt vor dem Herstellen der Instabilität eine hinreichend große Spannungsdifferenz, so liegt dieser Arbeitspunkt im Nahbereich eines Maximums mit höherer Leistung, was jedoch erkannt wird.

Das Verfahren dient zum Auffinden des linksseitigen Maximums. Nach einem gezielten Eingriff in die Regelschleifen kann die zuletzt gemessene Leistung mit einem Faktor größer Eins multipliziert und als Sollwert für die Regelung vorgegeben werden. Dadurch wird die Instabilität erzeugt. Liegt weiterhin eine Stabilität vor, wird die Leistung so lange erhöht bis die Instabilität eintritt. Um ein weiteres linksseitiges Maximum zu finden, kann die zuvor durchgeführte Prozedur wiederholt werden. Die Anzahl der Wiederholungen entspricht der Anzahl der linksseitigen Maxima mit höherer Leistung und kann begrenzt werden. Liegt zwischen dem sich jeweils neu einstellenden stabilen Arbeitspunkt und dem letzten stabilen Arbeitspunkt eine hinreichend große Spannungsdifferenz, so liegt dieser Arbeitspunkt im Nahbereich eines Maximums mit höherer Leistung, was jedoch erkannt wird.

Das Verfahren dient auch zum Auffinden eines rechtsseitigen Leistungsmaximums, indem eine Instabilität hergestellt wird. Nach dem gezielten Eingriff in die Regelschleifen wird die zuletzt gemessene Leistung mit einem Faktor nahe Null multipliziert und als Sollwert für eine Zeitdauer von z.B. kleiner einer Sekunde vorgegeben. So kann das System entlastet werden. Anschließend wird eine Leistung als Sollwert vorgegeben, die in einem Wertebereich vor dem Eingriff in die Regelschleifen liegt. Liegt zwischen dem sich neu einstellenden stabilen Arbeitspunkt und dem Arbeitspunkt vor dem Herstellen der Instabilität eine hinreichend große Spannungsdifferenz, so liegt dieser Arbeitspunkt im Nahbereich eines Maximums mit höherer Leistung, was erkannt wird. Liegt zwischen dem sich neu einstellenden stabilen Arbeitspunkt und dem Arbeitspunkt vor dem Herstellen der Instabilität eine hinreichend kleine Spannungsdifferenz, so liegt dieser Arbeitspunkt im Nahbereich des ursprünglichen Leistungsmaximums, und es ist rechtsseitig kein weiteres Maximum vorhanden, was jedoch erkannt wird.

Wird ein neuer Arbeitspunkt mit höherer Leistung erkannt, wird der neue Arbeitspunkt als Startwert an die Regelung übergeben, und die ursprünglichen Regelschleifen werden hergestellt, wodurch das System nahezu schwingungsfrei den neuen Arbeitspunkt mit höherer Leistung stabil einstellen kann.

Durch Einstellung der Anzahl der zu suchenden linksseitigen Maxima kann die Suche an die Verschattungsempfindlichkeit des Generators angepasst werden.

Ein weitere vorteilhafte Ausgestaltung des erfindungsgemäßen Verfahrens zeichnet sich dadurch aus, dass nach dem Eingriff in die Regelschleifen die Leistung des Stromrichters erhöht wird, so dass ein erster zu einem globalen Maximum korrespondierender Arbeitspunkt einer Leistungskennlinie sich zu einem zweiten Arbeitspunkt bewegt, der in der Nähe des Nullpunktes der Kennlinie liegt. Dieses Verfahren ist bei einem linksseitigen lokalen Maximum günstig.

Vorteilhaft ist auch, dass nach dem Eingriff in die Regelschleifen die Leistung des Stromrichters reduziert wird, so dass ein erster zu einem globalen Maximum korrespondierender Arbeitspunkt einer Leistungskennlinie sich zu einem zweiten Arbeitspunkt bewegt, der in der Nähe der Generatorleerlaufspannung liegt. Hierdurch kann eine Einstellung auf ein rechtsseitiges lokales Leistungsmaximum erfolgen.

In einer vorteilhaften Weiterbildung der Erfindung ist vorgesehen, dass nach dem Eingriff in die Regelschleifen die Leistung des Stromrichters reduziert wird, so dass ein erster zu einem lokalen Maximum korrespondierender Arbeitspunkt einer Leistungskennlinie sich zu einem zweiten Arbeitspunkt bewegt, der in der Nähe der Generatorleerlaufspannung liegt, wobei sich ein dritter Arbeitspunkt nach Erhöhen der Leistung einstellt, der in der Höhe des ersten Arbeitspunktes liegt und in der Nähe eines vierten Arbeitspunktes liegt, der ein Leistungsmaximum ist. Dieses Verfahren berücksichtigt ein rechtsseitiges Maximum höherer Leistung.

Weitere vorteilhafte Ausgestaltungen der Erfindung sind in den Unteransprüchen gekennzeichnet.

Ein Ausführungsbeispiel für den Betrieb eines Wechselrichters wird anhand der Zeichnungen näher erläutert, wobei weitere vorteilhafte Weiterbildungen der Erfindung und Vorteile derselben beschrieben sind.

Es zeigen:
- Fig. 1: eine Generator-Leistungskennlinie bei einem linksseitigen globalen Maximum,
- Fig. 2: eine Generator-Leistungskennlinie bei einem linksseitigen lokalen Maximum,
- Fig. 3: eine Generator-Leistungskennlinie bei einem rechtsseitigen lokalen Maximum,
- Fig. 4: eine Generator-Leistungskennlinie bei einem rechtsseitigen globalen Maximum,
- Fig. 5: ein Ablaufdiagramm bei einer Detektion eines linksseitigen Maximums,
- Fig. 6: ein Ablaufdiagramm bei einer Detektion eines rechtsseitigen Maximums,
- Fig. 7: eine Darstellung eines an einem Netz betriebenen PV-Generators, und
- Fig. 8: ein Ablaufdiagramm für eine kombinierte "rechts links" MPP-Suche.

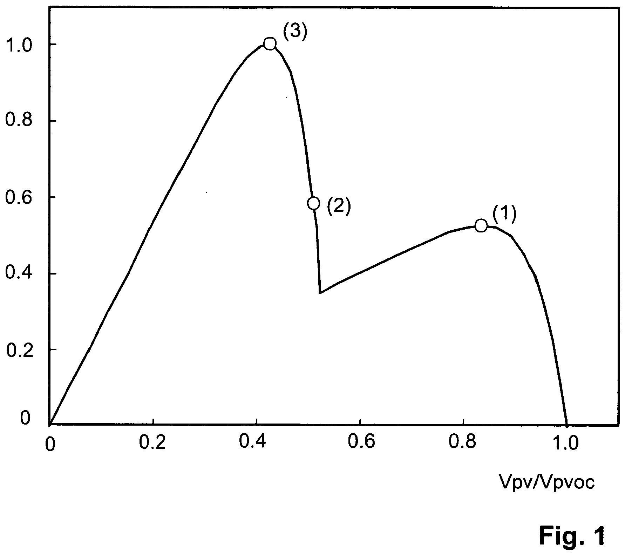

Fig. 1 zeigt eine Kennlinie eines teilverschatteten Photovoltaik-Generators bzw. einer Generatoranlage. Hierbei fällt auf einen Flächenanteil des Generators eine geringere Sonneneinstrahlung infolge eines Schattens oder einer anderen Ursache.

Die Kennlinie weist zwei Maxima (1) und (3) auf. Das rechte Maximum (1) wird als lokales Maximum bezeichnet, während das linke Maximum (3) als globales Maximum bezeichnet wird. Das linke (globale) Maximum (3) ist größer als das rechte (lokale) Maximum.

Bei Anwendung eines herkömmlichen MPP-Trackings kann es vorkommen, dass sich ein lokales Leistungsmaximum (1) einstellt, da nicht zwischen verschiedenen Leistungsmaxima unterschieden werden kann. Dadurch wird ein Teil der Sonnenenergie nicht genutzt, und die Energieausbeute der Anlage sinkt erheblich.

Herkömmliche MPPT arbeiten vorzugsweise in ständiger Suchbewegung und bewegen sich um ein lokales Leistungsmaximum herum.

### Linksseitiges globales Maximum

Dieser eben erläuterte Fall und die Wirkungsweise der Erfindung werden nun näher erläutert.

Die Erfindung nutzt ein Verfahren zum Auffinden eines Leistungsmaximums des Photovoltaik-Generators, bei dem ein MPP-Tracking eingesetzt wird, mit dem eine maximale Generatorleistung bei einem Arbeitspunkt der Generatorkennlinie eingestellt wird.

Durch das MPP-Tracking befindet sich der Arbeitspunkt bei (1) und kann sich ohne eine Änderung der Sonneneinstrahlung, Zellentemperatur und dergleichen nicht verschieben.

Erfindungsgemäß wird das eigentliche MPP-Tracking abgeschaltet. Das MPP-Tracking und eine Spannungsregelung werden praktisch deaktiviert. Dadurch ist es überhaupt möglich, den Arbeitspunkt zu verschieben. Anschließend wird der Generator belastet, damit sich ein neuer Arbeitspunkt der Generatorkennlinie einstellen kann. Der AC-Stromsollwert wird beispielsweise um den Faktor 1,05 erhöht. Dadurch entsteht eine Instabilität. Der Arbeitspunkt wandert sehr schnell in Richtung des globalen Maximums eines Arbeitspunktes (2) und ist dann wieder stabil. Wenn das MPP-Tracking wieder eingeschaltet wird, führt es das System zum optimalen Arbeitspunkt bzw. dem globalen Maximum (3).

Dadurch wird das höchste Maximum erreicht.

### Linksseitiges lokales Maximum

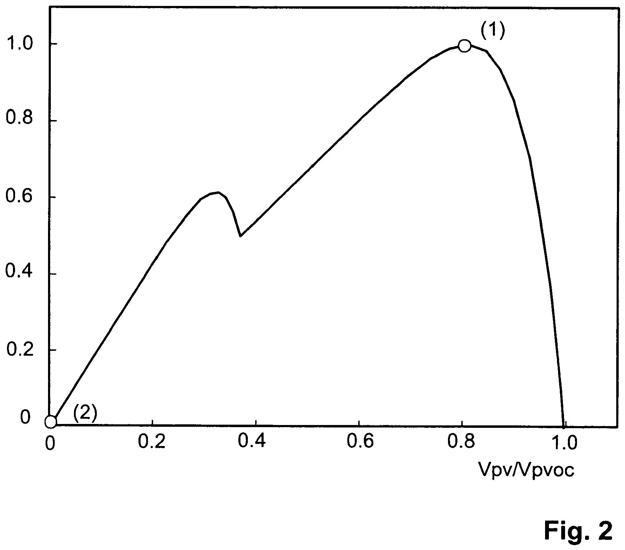

Fig. 2 zeigt einen Fall, bei dem sich der aktuelle Arbeitspunkt bereits im globalen Maximum (1) befindet, aber links davon ein weiteres (kleineres) Maximum existiert.

Das MPP-Tracking wird auch hier zunächst abgeschaltet. Durch eine Belastung bewegt sich jedoch der Arbeitspunkt sehr schnell auf der Kennlinie in Richtung des Arbeitspunktes (2), bei dem zwar der Strom höher ist, die Spannung jedoch zusammenbricht, so dass praktisch der Generator keine Leistung mehr liefert.

Da die hohe vorgegebene Sollleistung nicht eingestellt werden kann, ergibt sich kein stabiler Arbeitspunkt.

Vorzugsweise ist vorgesehen, dass eine Spannungsgrenze festgelegt wird, bei deren Unterschreitung der Sprung rückgängig gemacht wird bzw. der Generator sofort wieder entlastet wird.

Dadurch wird das höchste Maximum erreicht.

### Rechtsseitiges lokales Maximum

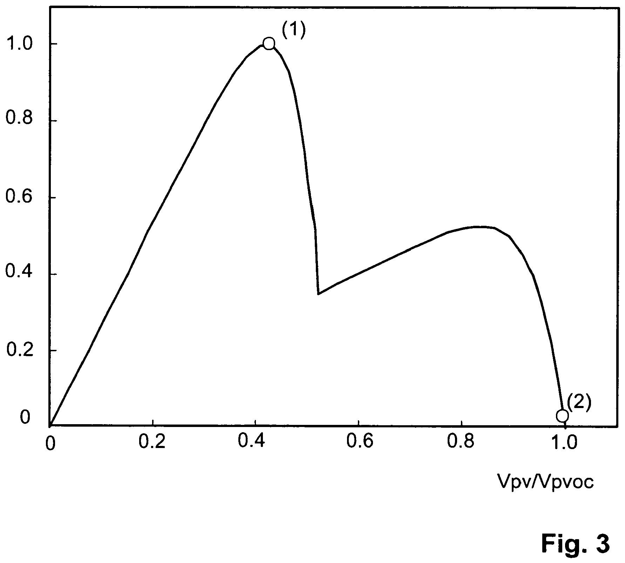

Fig. 3 zeigt den Fall, bei dem das MPP-Tracking sich bereits auf das globale Maximum (1) eingestellt hat. Der aktuelle Arbeitspunkt befindet sich bereits bei (1). Durch Deaktivieren des MPP-Trackings und anschließender Entlastung des Generators bewegt sich der Arbeitspunkt sehr schnell auf der Kennlinie zum Arbeitspunkt (2), der nahezu Leerlaufspannung aufweist. Bei einer erneuten Belastung mit einem Strom, der der Leistung im Arbeitspunkt (1) entspricht, kehrt der Arbeitspunkt wieder in seine Ausgangsposition (1) zurück.

Dadurch wird das höchste Maximum beibehalten.

### Rechtsseitiges globales Maximum

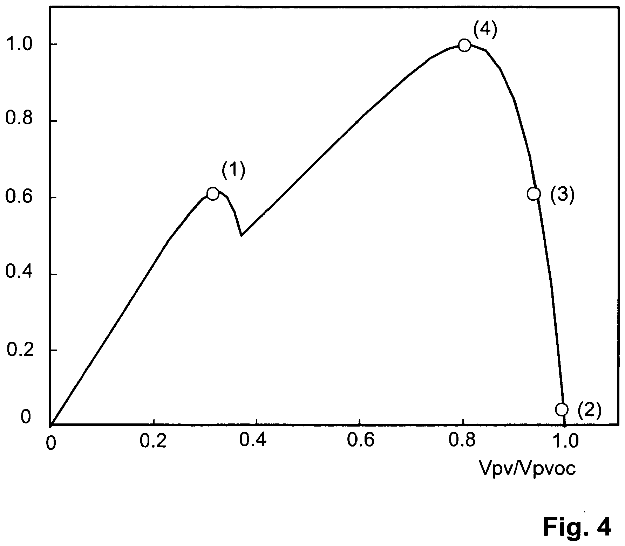

Fig. 4 veranschaulicht einen Fall, bei dem ein lokales Maximum (1) links vorhanden ist, wobei das MPP-Tracking diesen Arbeitspunkt fixiert. Durch Deaktivieren des MPP-Trackings und anschließende Entlastung stellt sich der neue Arbeitspunkt (2) ein, der in der Nähe der Leerlaufspannung ist. Bei einer erneuten Belastung mit einem Strom, der der Leistung im Arbeitspunkt (1) entspricht, bewegt sich der Arbeitspunkt zum Punkt (3). Ein Wiedereinschalten des MPP-Trackers bewirkt, dass sich das globale Maximum (4) einstellt.

Dadurch wird das größte Leistungsmaximum erreicht.

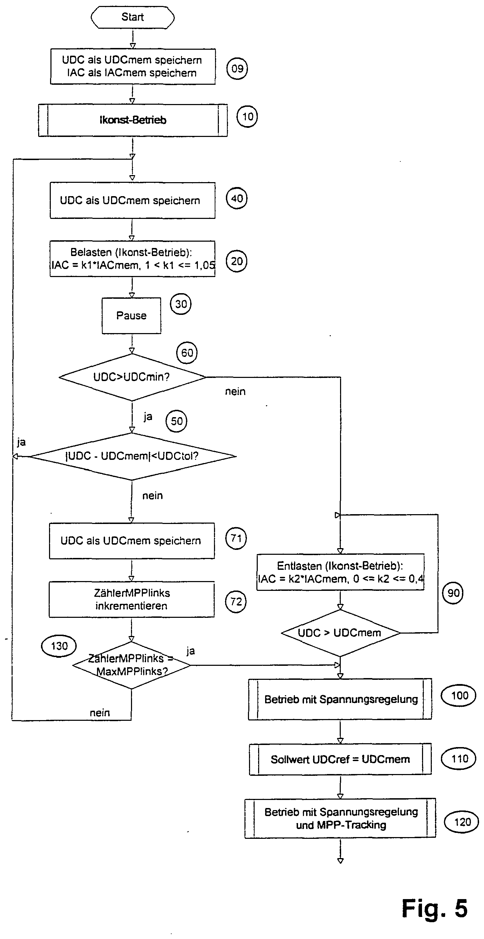

Fig. 5 veranschaulicht ein Ablaufdiagramm zur Detektion eines linksseitigen Maximums. Ausgangspunkt ist der Arbeitspunkt (1) gemäß Fig. 1 bzw. gemäß Fig. 2. Im Schritt 10 wird das MPP-Tracking deaktiviert. Es wird also auf Netzstromregelung "Ikonst-Betrieb" umgestellt. Zuvor werden die Wertepaare für die PV-Spannung UDC und den Netzstrom IAC gespeichert (Schritt 9). Im Schritt 20 wird der Netzstrom bzw. der AC-Strom (des Wechselrichters) erhöht, so dass sich beispielsweise gemäß Fig. 1 der Arbeitspunkt von (1) nach (2) bewegen kann. Nach einer Pause (Schritt 30) wird geprüft, ob der sich einstellende neue Arbeitspunkt im Nahbereich des alten Arbeitspunktes liegt (Abfrage 50). Stellt sich ein stabiler Arbeitspunkt ein, dann gilt z.B. eine Kennlinie nach Fig. 1 (Schritt 60). Wird aber kein stabiler Arbeitspunkt erreicht, dann bricht die Spannung zusammen und ein Fall gemäß Fig. 2 ist gegeben. Dieser wird erkannt, indem die Spannung UDCmin erreicht wird (Abfrage 60). Wenn kein neuer stabiler Arbeitspunkt gemäß Fig.1 sich einstellt, dann besteht eine Instabilität und die Spannung erreicht die DC-Unterspannungsgrenze. Dieser Vorgang läuft sehr schnell ab, da der Arbeitspunkt den instabilen Bereich überschreitet.

Liegt der neue Arbeitspunkt oberhalb der DC-Unterspannungsgrenze so wurde ein neues Maximum detektiert und der Spannungswert wird gespeichert (Schritt 71) und ein Zähler inkrementiert. Mit Hilfe einer Abfrage im Schritt 130 kann die Anzahl der zu suchenden Maxima begrenzt werden.

Liegt der neue Arbeitspunkt weit rechts des Maximums (3), so führt die nächste Stromerhöhung (Schritt 20) nicht zu einer weiteren Instabilität, was durch die Abfrage (Schritt 50) erkannt wird. Der Zyklus (Schritt 20, 30, 40, 50) setzt sich so lange fort bis das Maximum (3) überschritten wird.

Mit dem erfindungsgemäßen Verfahren wird der Arbeitspunkt (1) gemäß Fig. 2 beibehalten. Nach der erfindungsgemäßen Stromerhöhung (Schritt 20) wird kein weiterer stabiler Arbeitspunkt gefunden. Die Spannung sinkt rasch bis auf die unterste Spannungsgrenze ab, was durch die Abfrage im Schritt 60 erkannt wird. Ist dies der Fall, dann muss das System durch Sperren des Wechselrichters (Schritt 90) entlastet werden. Dadurch steigt die DC-Spannung nun rasch wieder an. Erreicht die PV-Spannung den zuletzt gespeicherten Spannungswert, wird die Spannungsregelung wieder zugeschaltet und das MPP-Tracking aktiviert.

Wird die linksseitige Suche durch den Zähler (130) abgebrochen, dann wird der letzte gespeicherte stabile PV-Spannungswert (40) als Sollwert für die Spannungsregelung (110) vorgegeben, die zusammen mit dem MPP-Tracking aktiviert wird. Das System spielt sich auf das globale Maximum (1) der Generatorkennlinie (Schritt 120) ein.

Weiterhin kann auch eine linkseitige Suche wie folgt beschrieben werden.

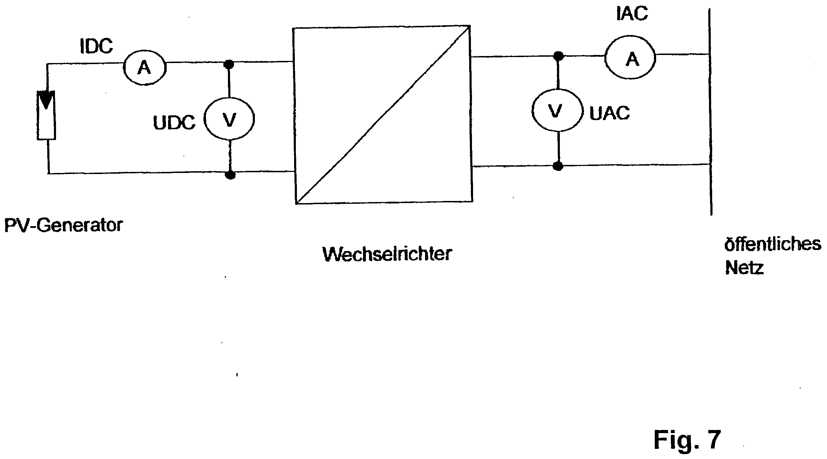

Zunächst werden aktuelle Messwerte für die DC-Spannung und den AC-Strom (IAC) gemäß Fig. 7 mittels Abtastglieder bzw. einer ersten S&H-Stufe (Sample & Hold) für IAC und einer zweiten S&H-Stufe für UDC gespeichert. Dies entspricht Schritt 09. Anschließend wird der Regelkreis auf einen Konstantbetrieb beispielsweise mittels eines Schalters umgeschaltet (Schritt 10). Der Sollwert für die Leistung wird erhöht. Hierzu wird in der ersten S&H-Stufe (IAC) mit einem Faktor größer Eins multipliziert und an den Stromregler übergeben (Schritt 20). Nach einer Pause wird überprüft, ob die DC-Spannung am Generator unter die minimal zugelassene Grenze abgefallen ist. Dieser Vorgang läuft sehr schnell ab, da die DC-Spannungsregelung und der MPP-Tracker nicht mehr aktiv sind und so die DC-Spannung nicht mehr stabil gehalten werden kann. Mit Hilfe der S&H-Stufen, einem Proportionalglied (0,9 < K < 1), einer Summationsstelle und einem Komparator (nicht gezeigt) wird festgestellt, ob sich der neue Arbeitspunkt in der Nähe des alten Arbeitspunktes befindet (Schritt 50). Ist dies nicht der Fall, liegt der neue Arbeitspunkt im Nahbereich eines lokalen oder globalen Maximums, das größer ist als das lokale Maximum, auf dem sich der Arbeitspunkt zuvor befand und der Komparatorausgang inkrementiert einen nicht dargestellten Zähler (MPP links). Falls die Anzahl der zu suchenden linksseitigen Maxima begrenzt wird, d.h. der maximale Zählerstand des Zählers "MPP links" ist erreicht, wird der in der zweiten S&H-Stufe (UDC) gespeicherte Wert durch Umschalten des Schalters an die Spannungsregelung und an den MPP-Tracker übergeben. Durch einen weiteren Umschaltvorgang des Schalters wird dann der Regelkreis wieder hergestellt. In dieser Schaltung kann jeder Arbeitspunkt auf der Generatorkennlinie stabil eingestellt werden.

in den Schritten gemäß Fig. 5 wird also Folgendes durchgeführt:
- Schritt 9:: Erste und zweite S&H-Stufe (IAC, UDC) werden aktiviert,
- Schritt 10:: Schalter befindet sich in einer Schalterstellung "B".
- Schritt 40:: Zweite S&H-Stufe (UDC) wird aktiviert.
- Schritt 20:: Netzstrom IAC wird erhöht bzw. der Wert der ersten S&H-Stufe (IAC) wird mit z.B. K = 1,05 multipliziert.
- Schritt 50:: Der Wert, der in der zweiten S&H-Stufe (UDC) gespeichert ist, wird durch den Komparator verglichen.
- Schritt 71:: Die zweite S&H-Stufe wird aktiviert.
- Schritt 100:: Der Schalter wird umgeschaltet (z.B. Schalterstellung "A").
- Schritt 110:: Der Schalter wird zu einer dritten Stellung umgeschaltet (z.B. Schalterstellung "F")

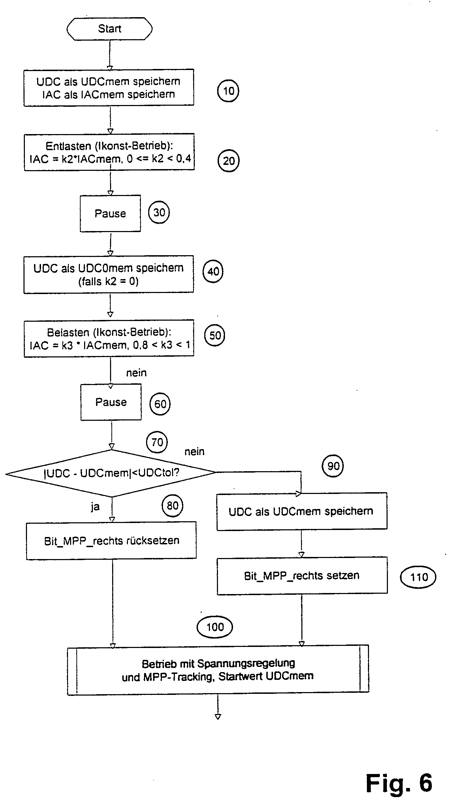

Fig. 6 veranschaulicht die Detektion eines rechtsseitigen Maximums gemäß Fig. 3 und Fig. 4. Auch hier wird das MPP-Tracking und die Spannungsregelung zunächst deaktiviert, damit der stabile Arbeitspunkt (1) verlassen werden kann. Es wird auch hier auf Netzstromregelung "Ikonst" umgestellt, jedoch ist der Strom geringer, insbesondere 0 - 0,4 IAC. Zuvor werden die Wertepaare für die PV-Spannung UDC und den Netzstrom IAC gespeichert. Wie Fig. 3 veranschaulicht, erreicht der Generator den Leerlaufpunkt (2), wenn ein kleiner Strom nahe Null vorgegeben wird. Im Schritt 50 wird der Generator wieder belastet, so dass sich im Fall der Fig. 3 der Arbeitspunkt (1) wieder einstellt.

Damit ist kein weiteres Maximum vorhanden und die rechtsseitige Suche wird abgebrochen.

Andernfalls wird im stromgeregelten Betrieb das System mit nahe zu dem im Arbeitspunkt (1) gemessenen Strom belastet (Schritt 50). Wird ein Maximum gefunden, welches größer als das alte lokale Maximum ist, wird der Zähler gesetzt (Schritt 110) und die Spannungsregelung und das MPPT wird aktiviert (Schritt 100). Wenn sich ein neuer Arbeitspunkt nahe dem alten Arbeitspunkt (1) einstellt, dann ist rechtsseitig kein weiteres Maximum vorhanden, und der Zähler wird zurückgesetzt.

Weiterhin kann auch eine rechtsseitige Suche bezugnehmend auf Fig. 6 wie folgt beschrieben werden.

Der MPP-Tracker befindet sich zunächst in einem lokalen oder globalen Maximum. Anschließend wird eine Instabilität erzeugt. Aktuelle Messwerte für die DC-Spannung (UDC) und den AC-Strom (IAC) werden ebenfalls in den Abtasthaltegliedern bzw. S&H-Stufen für IAC und UDC gespeichert (Schritt 10, MPPSuche "rechts"). Nun wird der Regelkreis auf Konstantstrombetrieb mittels eines Schalters umgeschaltet. Der Sollwert für die Leistung wird nun deutlich gesenkt. Hierzu wird der in der S&H-Stufe für IAC gespeicherte Wert mit einem Faktor nahe Null multipliziert und an einen Stromregler übergeben (Schritt 20). Falls der Faktor K2 = 0 gewählt wird, kann im folgenden die Leerlaufspannung gespeichert werden.

Der Sollwert für die Leistung wird nun in etwa auf den alten Wert gebracht. Hierzu wird der in der S&H-Stufe gespeicherte Wert mit einem Faktor nahe Eins multipliziert und an den Stromregler übergeben (Schritt 50).

Nach einer weiteren Pause wird überprüft, ob die sich einstellende neue DCSpannung am Generator sich weit vom alten Arbeitspunkt entfernt hat. Befindet sich der neue Spannungswert im Nahbereich des alten Spannungswertes, so gibt es kein weiteres rechtsseitiges Maximum, das größer ist als das zuvor gefundene alte Maximum. Dies wird mit Hilfe einer Schaltungskombination aus der S&H Stufe für UDC, einem nicht dargestellten Proportionalglied mit einem Proportionalbeiwert 0,9 < K < 1,1, einer Summationsstelle und einem Komparator erkannt (Schritt 70) im Flussdiagramm gemäß Fig. 6 MPP-Suche "rechts".

Andernfalls, d.h. der neue Arbeitspunkt befindet sich nicht im Nahbereich des alten Arbeitspunktes, ergibt sich ein neuer Arbeitspunkt im Nahbereich eines neuen Leistungsmaximums, das größer ist als das zuvor. Dies wird mit Hilfe der Kombination aus der S&H Stufe, dem Proportionalglied mit dem Proportionalbeiwert 0,9 < K5 < 1,1, der Summationsstelle und dem Komparator erkannt (vgl. Schritt 70 im Flussdiagramm MPP-Suche "rechts", Fig. 6). Der Komparatorausgang inkrementiert einen Zähler "MPP-rechts" (vgl. Schritt 110). Abschließend wird der Schalter umgeschaltet und der neue Spannungswert an die Spannungsregelung und den MPP-Tracker übergeben. Der ursprüngliche Regelkreis wird durch Umschalten in eine andere Schalterstellung wieder hergestellt. In dieser Schalterstellung kann jeder Arbeitspunkt der Generatorkennlinie stabil eingestellt werden.

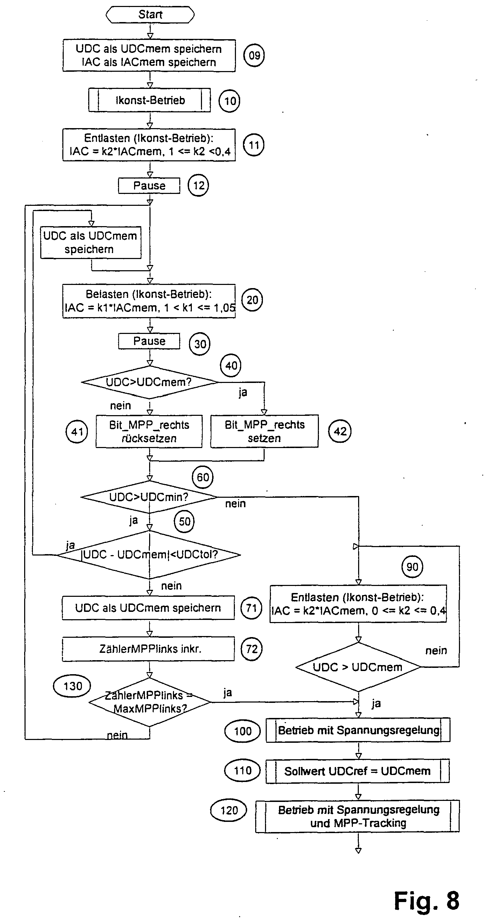

Fig. 8 zeigt eine Variante, bei der eine MPP-Suche "rechts" und eine MPP-Suche "links" mit einer einzigen Regelungsstruktur realisiert ist.

## Patentansprüche

1. Verfahren zum Auffinden eines Leistungsmaximums eines Photovoltaik-Generators unter Einsatz einer MPP-Regelung
**dadurch gekennzeichnet,**
**dass** das Verfahren umfasst:
- Betrieb des Generators mit aktivierter MPP-Regelung bei einem ersten Leistungswert und einem zugeordneten ersten Arbeitspunkt;
- Deaktivierung der MPP-Regelung und einer Spannungsregelung;
- Belastung des Generators mit einem zweiten Leistungswert, der größer als der erste Leistungswert ist;
- in dem Fall, dass der Generator den zweiten Leistungswert an einem zugeordneten zweiten Arbeitspunkt stabil bereitstellen kann, Aktivierung der Spannungsregelung und der MPP-Regelung an dem zweiten Arbeitspunkt;
- in dem Fall, dass der Generator den zweiten Leistungswert bei einem zugeordneten zweiten Arbeitspunkt nicht stabil bereitstellen kann, Aktivierung der Spannungsregelung und der MPP-Regelung am ersten Arbeitspunkt.

2. Verfahren nach Anspruch 1,
**dadurch gekennzeichnet,**
**dass** das Verfahren weiterhin nach Deaktivierung der MPP-Regelung und vor Belasten des Generators umfasst:
- Entlasten des Generators derart, dass sich ein Arbeitspunkt einstellt, der in der Nähe einer Generatorleerlaufspannung liegt.

3. Verfahren nach Anspruch 1 oder 2,
**dadurch gekennzeichnet,**
**dass** in dem Fall, dass der Generator den zweiten Leistungswert an einem zugeordneten zweiten Arbeitspunkt stabil bereitstellen kann, der Generator so oft wiederholt mit steigenden Leistungswerten belastet wird, bis er einen der steigenden Leistungswerte nicht stabil bereitstellen kann und die Spannungsregelung und die MPP-Regelung dann an einem dritten Arbeitspunkt aktiviert werden, der dem letzten der steigenden Leistungswerte zugeordnet ist, den der Generator stabil bereitstellen kann.

4. Verfahren nach Anspruch 3,
**dadurch gekennzeichnet,**
**dass** die Anzahl der wiederholten Belastungen des Generators mit steigenden Leistungswerten auf einen vorgebbaren Maximalwert begrenzt wird und nach Abbruch der Wiederholung der Belastung die Spannungsregelung und die MPP-Regelung an einem vierten Arbeitspunkt aktiviert werden, der dem letzten der steigenden Leistungswerte zugeordnet ist, den der Generator stabil bereitstellen kann.

5. Verfahren nach Anspruch 4,
**dadurch gekennzeichnet,**
**dass** ein Zähler für die Anzahl der wiederholten Belastungen des Generators mit steigenden Leistungswerten inkrementiert wird, wenn ein dem Leistungswert zugeordneter neuer Arbeitspunkt außerhalb des Nahbereichs eines alten Arbeitspunktes liegt, der dem Leistungswert vor der letzten Steigerung des Leistungswertes zugeordnet ist.

6. Verfahren nach einem der vorhergehenden Ansprüche,
**dadurch gekennzeichnet,**
**dass** in dem Fall, dass der Generator einen der steigenden Leistungswerte bei einem zugeordneten Arbeitspunkt nicht stabil bereitstellen kann, der Generator wieder entlastet wird, bevor die Spannungsregelung und die MPP-Regelung an einem der Arbeitspunkte aktiviert werden, die dem letzten der steigenden Leistungswerte zugeordnet sind, den der Generator stabil bereitstellen kann.

7. Verfahren nach einem der vorhergehenden Ansprüche,
**dadurch gekennzeichnet,**
**dass** der Fall, dass der Generator einen steigenden Leistungswert bei einem zugeordneten Arbeitspunkt nicht stabil bereitstellen kann anhand des Unterschreitens einer Spannungsgrenze am Generator erkannt wird.

8. Verfahren nach einem der vorhergehenden Ansprüche,
**dadurch gekennzeichnet,**
**dass** durch einen Vergleich, ob eine Spannungsdifferenz zwischen einem ersten und einem zweiten Arbeitspunkt kleiner als ein vorgebbarer Wert ist, geprüft wird, ob der zweite Arbeitspunkt im Nahbereich des ersten Arbeitspunktes liegt.

## Claims

1. A method for finding a power maximum of a photovoltaic generator using an MPP control, **characterized in that** the method comprises:
- operating the generator with the MPP control activated at a first power value and an associated first operating point;
- deactivating the MPP control and a voltage control;
- loading the generator with a second power value that is greater than the first power value;
- in the case that the generator can stably provide the second power value at an associated second operating point, activating the voltage control and the MPP control at the second operating point;
- in the case that the generator cannot stably provide the second power value at an associated second operating point, activating the voltage control and the MPP control at the first operating point.

2. The method according to claim 1, **characterized in that** the method further comprises after deactivating the MPP control and before loading the generator:
- unloading the generator such that an operating point adjusts itself that is in the vicinity of a generator idle voltage.

3. The method according to claim 1 or 2, **characterized in that**, in the case that the generator can stably provide the second power value at an associated second operating point, the generator is repeatedly loaded with increasing power values until it fails to stably provide one of the increasing power values, and then the voltage control and the MPP control are activated at a third operating point associated with the last of the increasing power values that the generator can stably provide.

4. The method according to claim 3, **characterized in that** the number of repeated loading of the generator with increasing power values is limited to a predefinable maximum value and after termination of the repetition of the loading, the voltage control and the MPP control are activated at a fourth operating point associated with the last of the increasing power values that the generator can stably provide.

5. The method according to claim 4, **characterized in that** a counter for the number of repetitive loading of the generator with increasing power values is incremented if a new operating point associated with the power value is outside of the vicinity of an old operating point associated with the power value before the last increase of the power value.

6. The method according to any one of the preceding claims, **characterized in that** in the case that the generator cannot stably provide one of the increasing power values at an associated operating point, the generator is unloaded again before the voltage control and the MPP control are activated at one of operating points associated with the last of the increasing power values that the generator can stably provide.

7. The method according to any one of the preceding claims, **characterized in that** the case that the generator cannot stably provide an increasing power value at an associated operating point is detected on the basis of undershooting a voltage limit at the generator.

8. The method according to any one of the preceding claims, **characterized in that** it is analyzed whether a second operating point is in the vicinity of a first operating point by comparing whether a voltage difference between the first and the second operating point is smaller than a predefinable value.

## Revendications

1. Procédé pour trouver un maximum de puissance d'un générateur photovoltaïque en utilisant une régulation MPP, **caractérisé en ce que** le procédé comprend :
- fonctionnement du générateur avec la régulation MPP activée à une première valeur de puissance et un premier point de fonctionnement associé ;
- désactivation de la régulation MPP et d'une régulation de tension ;
- mise en charge du générateur avec une deuxième valeur de puissance qui est supérieure à la première valeur de puissance ;
- dans le cas où le générateur peut délivrer la deuxième valeur de puissance de manière stable à un deuxième point de fonctionnement associé, activation de la régulation de tension et de la régulation MPP au deuxième point de fonctionnement ;
- dans le cas où le générateur ne peut pas délivrer la deuxième valeur de puissance de manière stable à un deuxième point de fonctionnement associé, activation de la régulation de tension et de la régulation MPP au premier point de fonctionnement.

2. Procédé selon la revendication 1, **caractérisé en ce que** le procédé comprend en outre, après la désactivation de la régulation MPP et avant la mise en charge du générateur :
- décharge du générateur de telle sorte qu'il s'établisse un point de fonctionnement qui est proche d'une tension de fonctionnement à vide du générateur.

3. Procédé selon la revendication 1 ou 2, **caractérisé en ce que** dans le cas où le générateur peut délivrer la deuxième valeur de puissance de manière stable à un deuxième point de fonctionnement associé, le générateur est mis en charge avec des valeurs de puissance croissantes de manière répétée jusqu'à ce qu'il ne puisse pas délivrer l'une des valeurs de puissance croissantes de manière stable, et la régulation de tension ainsi que la régulation MPP sont alors activées à un troisième point de fonctionnement qui est associé à la dernière des valeurs de puissance croissantes que le générateur peut délivrer de manière stable.

4. Procédé selon la revendication 3, **caractérisé en ce que** le nombre de mises en charge répétées du générateur avec des valeurs de puissance croissantes est limité à une valeur maximale pouvant être prédéfinie, et après l'interruption de la répétition de la mise en charge, la régulation de tension et la régulation MPP sont activées à un quatrième point de fonctionnement qui est associé à la dernière des valeurs de puissance croissantes que le générateur peut délivrer de manière stable.

5. Procédé selon la revendication 4, **caractérisé en ce qu'**un compteur du nombre de mises en charge répétées du générateur avec des valeurs de puissance croissantes est incrémenté lorsqu'un nouveau point de fonctionnement associé à la valeur de puissance se trouve en-dehors de la zone de proximité d'un ancien point de fonctionnement qui est associé à la valeur de puissance avant la dernière augmentation de la valeur de puissance.

6. Procédé selon l'une des revendications précédentes, **caractérisé en ce que** dans le cas où le générateur ne peut pas délivrer l'une des valeurs de puissance croissantes de manière stable à un point de fonctionnement associé, le générateur est de nouveau déchargé avant que la régulation de tension et la régulation MPP soient activées à l'un des points de fonctionnement qui sont associés à la dernière des valeurs de puissance croissantes que le générateur peut délivrer de manière stable.

7. Procédé selon l'une des revendications précédentes, **caractérisé en ce que** le cas où le générateur ne peut pas délivrer une valeur de puissance croissante de manière stable à un point de fonctionnement associé est détectée à l'aide d'un franchissement vers le bas d'une limite de tension au niveau du générateur.

8. Procédé selon l'une des revendications précédentes, **caractérisé en ce qu'**un contrôle est effectué afin de vérifier si le deuxième point de fonctionnement se trouve dans la zone de proximité d'un premier point de fonctionnement en comparant une différence de tension entre un premier et un deuxième point de fonctionnement pour déterminer si elle est inférieure à une valeur pouvant être prédéfinie.
